# EUROPÄISCHE PATENTSCHRIFT

(11) **EP 4 697 106 B1**
(45) Veröffentlichungstag und Bekanntmachung des Hinweises auf die Patenterteilung: **25.11.2026**
(21) Anmeldenummer: 24194331.5
(22) Anmeldetag: 13.08.2024
(51) Int. Cl.: G05B 19/042, H04L 12/40, G05B 19/05, G05B 19/418

(54) **GATEWAY FÜR EIN FELDBUSSYSTEM**
GATEWAY FOR A FIELD BUS SYSTEM
PASSERELLE POUR UN SYSTÈME DE BUS DE TERRAIN

(43) Veröffentlichungstag der Anmeldung: 18.02.2026
(73) Patentinhaber: Murrelektronik GmbH, 71570 Oppenweiler (DE)
(72) Erfinder: Wolff, Ingo, 71570 Oppenweiler (DE); Wiedemann, Wolfgang, 71570 Oppenweiler (DE)
(74) Vertreter: Prinz & Partner mbB

(56) Entgegenhaltungen:
- EP-A1- 4 242 758
- EP-B1- 4 250 030
- US-A1- 2008 005 550
- US-A1- 2014 122 754
- US-A1- 2017 364 045

## Beschreibung

Die Erfindung betrifft ein Gateway für ein Feldbussystem zur Anbindung einer Steuerung an eine Industrieanlage. Außerdem betrifft die Erfindung ein Feldbussystem.

Maschinen oder Industrieanlagen werden bisher üblicherweise als monolithisches Konstrukt aufgebaut. Damit ist gemeint, dass die Maschine oder Industrieanlage zunächst komplett geplant und dann aufgebaut wird.

Es etabliert sich jedoch auch zunehmend das Konzept modularer Industrieanlagen. Hierbei werden mehrere Module, beispielsweise einzelne Baugruppen oder ganze Maschinen, zu einer Anlage verbunden. Die einzelnen Module sind auch hier typischerweise monolithisch gebaut.

In der Regel hat eine Maschine bzw. Industrieanlage eine Steuerung, die eine Feldebene steuert. Die Feldebene besteht heute zumeist aus einem Feldbus, IO-Modulen sowie Sensoren und Aktoren. Es werden traditionell Pläne und Stücklisten mit jeder einzelnen Komponente angelegt. In der Steuerung werden dann mittels einer Hardwarekonfiguration alle Komponenten abgebildet, benannt und auch parametriert. Hierdurch ist die Steuerung in der Lage, verschiedene Endpunkte, insbesondere Sensoren oder Aktoren, der Maschine bzw. Industrieanlage anzusprechen.

Die herkömmliche Arbeitsweise geht davon aus, dass alle Endpunkte vorhanden sind. Wenn ein Endpunkt fehlt oder nicht der Beschreibung aus der Hardwarekonfiguration entspricht, kann davon ausgegangen werden, dass ein Fehler vorliegt. Diese Annahme wird genutzt, um ein Fehlverhalten zu vermeiden bzw. Fehler festzustellen. Steuerungen und Feldbussysteme, insbesondere ProfiNet, Ethernet IP, Powerlink, CC link IE und Ethercat, überprüfen zuerst, ob die Konfiguration mit dem tatsächlichen Hardwarezustand übereinstimmt. Hieraus wird dann beispielsweise entschieden, ob eine Maschine bzw. Industrieanlage in Betrieb genommen werden kann.

Traditionell ist nicht vorgesehen, dass Maschinenteile oder Industrieanlagenteile in einer veränderten Form vorliegen. Allenfalls ist es bekannt, dass die Industrieanlage in der Steuerung überdimensioniert hinterlegt ist, beispielsweise mit 120 % der vorgesehenen Komponenten, wobei einzelne Komponenten ausgeblendet werden können, um die tatsächlich vorhandene Industrieanlage dann vorzufinden.

Mit zunehmendem Technologiefortschritt wird die Anpassbarkeit an sich schnell verändernde Produktionsanforderungen jedoch immer wichtiger, was sich durch das Ausblenden von Komponenten nicht mehr realisieren lässt. Serienmaschinen werden daher heute oftmals als Baukasten geplant. Hierbei sind bestimmte Bausteine optional oder liegen in verschiedenen Ausstattungsoptionen vor. Die Hardwarekonfiguration muss daraufhin bei jeder Maschine angepasst werden. Gegebenenfalls müssen auch Programme auf die Konfiguration angepasst werden.

Es ist auch möglich, einzelne Komponenten einzusetzen, wie z. B. Sensoren und Aktoren, die sich in ihrer Hardware unterscheiden, aber gleiche Funktionen und/oder Eigenschaften aufweisen. Hier sind insbesondere Komponenten verschiedener Hersteller zu nennen. Oftmals sind diese nicht kompatibel, da sie Datenschnittstellen aufweisen, die sich minimal unterscheiden. Der Einsatz einer Komponente eines anderen Herstellers ist somit zumeist mit einer aufwändigen Programmänderung und/oder Softwareanpassung der Steuerung verbunden. Beim Ersatz einer Komponente durch eine andere Komponente, welche die gleichen Funktionen bietet, aber eine andere Schnittstelle aufweist, ist der Aufwand der Umprogrammierung oft nicht gerechtfertigt. Ist eine bestimmte defekte Komponente jedoch nicht mehr lieferbar, kommt es zum Anlagenstillstand, bis die Hardwarekonfiguration und gegebenenfalls vorhandene Softwareprogramme angepasst sind. Daher wäre es wünschenswert, verschiedene Sensoren oder Aktoren für die gleiche Funktion einsetzen und einfach austauschen zu können.

Zu weiteren Herausforderungen kann es kommen, wenn verschiedene Bestandteile einer Maschine und/oder Industrieanlage mit verschiedenen Feldbussen arbeiten. Dies kommt beispielsweise bei Technologieumstellungen bzw. Weiterentwicklungen und/oder sogenannten Brownfield-Anlagen vor, also Industrieanlagen, die bereits gebaut und schon seit längerer Zeit in Betrieb sind und in die neue oder weiterentwickelte Funktionen integriert werden, wie zum Beispiel eine loT-Anbindung (engl. Internet of Things), also eine Anbindung an eine globale Informationsinfrastruktur.

In diesen Fall ergibt sich die Notwendigkeit, Schnittstellen zwischen den Feldbussen zu schaffen. Zu diesem Zweck müssen Informationen neu zugeordnet werden. Es kann außerdem auch notwendig sein, Hardwarekomponenten ganz oder teilweise auszutauschen, beispielsweise herkömmliche Sensoren und/oder Aktoren durch moderne IO-Link- oder SPE-Varianten (Single pair Ethernet) zu ersetzen.

Aus dem Stand der Technik sind verschiedene Schnittstellenvorrichtungen bekannt, beispielsweise Gateways, welche eine Kommunikation zwischen den verschiedenen Feldbussen und/oder zwischen einer übergeordneten Steuerung und den Feldbussen ermöglichen.

Beispielsweise offenbart die EP 4 242 758 A1 ein Gateway mit einer ersten Kommunikationsschnittstelle zur Kommunikation mit einer übergeordneten Einheit, beispielsweise einer Steuereinheit, und mit einer zweiten Kommunikationsschnittstelle zur Kommunikation mit mindestens einem Feldgerät. Das Gateway ist dazu eingerichtet, das mindestens eine Feldgerät in Folge eines Auslöseereignisses automatisch zu erkennen und im Gateway zu parametrieren.

Die EP 4 250 030 B1 offenbart eine konfigurierbare Ein-/Ausgabevorrichtung, die als Kommunikationsschnittstelle zwischen einer Steuerungsebene und einer Feldebene einer Automatisierungsplattform dient. Die Ein-/Ausgabevorrichtung ist dazu ausgebildet, eine Zuordnung zwischen Signalen der Steuerungsebene und Funktionalitäten von Funktionseinheiten der Feldebene zu schaffen.

Aus der US 2014/122754 A1 ist ferner ein Verfahren zum Konfigurieren eines Gateways in einem dezentral aufgebauten Automatisierungssystem bekannt. Das Gateway weist verschiedene Funktionseinheiten auf, über die unterschiedliche Verbindungen zu angeschlossenen Feldgeräten sowie zu einer übergeordneten Steuerung darstellbar sind und konfiguriert werden können.

Darüber hinaus offenbart die US 2008/005550 A1 ein Verfahren zum Austauschen eines Feldgerätes der Automatisierungstechnik. Hierbei werden Daten des auszutauschenden Feldgerätes in eine Speichereinheit eines Gateways eingelesen und nach dem Austausch von dem Gateway in das Ersatzgerät übertragen.

Die Installation der oben beschriebenen Gateways ist jedoch technisch aufwändig und fehleranfällig, da zur Einrichtung der Kommunikationsverbindung ein Eingriff in die übergeordnete Steuerung notwendig ist.

Die Aufgabe der Erfindung ist es, die oben beschriebenen Probleme der aus dem Stand der Technik bekannten Systeme auf technisch einfache Weise zu lösen.

Die Aufgabe wird erfindungsgemäß gelöst durch ein Gateway für ein Feldbussystem zur Anbindung einer Steuerung an eine Industrieanlage, die eine Mehrzahl unterschiedlicher Komponenten aufweist. Das Gateway umfasst wenigstens eine Komponentenschnittstelle, über welche die unterschiedlichen Komponenten gleichzeitig oder nacheinander anbindbar sind, eine Steuerungsschnittstelle, an welche eine Steuerung der Industrieanlage anbindbar ist, und ein Datenverarbeitungsmodul. Das Datenverarbeitungsmodul ist dazu ausgebildet, wenn zumindest eine der Komponenten an die wenigstens eine Komponentenschnittstelle angebunden ist, die zumindest eine Komponente anhand einer ihr zugeordneten Hardwareadresse zu identifizieren und mit der zumindest einen Komponente über die Komponentenschnittstelle zu kommunizieren. Ferner ist das Datenverarbeitungsmodul dazu ausgebildet, wenn die Steuerung an die Steuerungsschnittstelle angebunden ist, mit der Steuerung zu kommunizieren und die zumindest eine Komponente dabei gegenüber der Steuerung als eine funktionsbasierte Repräsentation darzustellen die von der Steuerung ansteuerbar ist. Das Gateway ist dazu ausgebildet, Ansteuerungen durch die Steuerung an die zumindest eine Komponente weiterzuleiten unter Berücksichtigung einer Zuordnungstabelle, auf die das Gateway zumindest zugreifen kann.

Die wenigstens eine Komponentenschnittstelle kann eine Hardwareschnittstelle, beispielsweise einen Anschluss für ein Kabel, und/oder eine Softwareschnittstelle umfassen, durch welche eine Datenverbindung zwischen den anbindbaren Komponenten und dem Gateway herstellbar ist.

Das Datenverarbeitungsmodul kann als Hardwarekomponente und/oder als Softwarekomponente ausgebildet sein.

Die Steuerung ist beispielsweise eine speicherprogrammierbare Steuerung (SPS).

Die Grundidee besteht darin, funktionsbasierte Repräsentationen von Komponenten anstelle der üblichen strukturell orientierten Repräsentation zur Steuerung der Industrieanlage zu nutzen und hierfür eine geeignete Schnittstelle bereitzustellen. Es werden also nicht mehr einzelne Komponenten sowie deren topologische Positionen gegenüber der Steuerung dargestellt, sondern deren Funktionen. Bei der Funktion kann also auf die Eigenschaften und/oder Parameter der jeweiligen Komponente abgestellt werden. Mit anderen Worten sieht die Steuerung virtuelle Adressen von Funktionen, was den funktionsbasierten Repräsentationen entspricht. Das Gateway ordnet dann die virtuellen Adressen von Funktionen, also die funktionsbasierten Repräsentationen, den Komponenten zu, insbesondere den Hardwareadressen.

Die funktionsbasierten Repräsentationen können dabei insbesondere die Sensoren und/oder Aktoren einer mechatronischen Einheit abbilden, beispielsweise einer Fördereinheit, einer Materialzuführung, einem Roboterarm oder einer beliebigen anderen Komponente der Industrieanlage.

Mit anderen Worten stellen die funktionsbasierten Repräsentationen also Hardwareabstraktionen der jeweiligen Komponenten dar, insbesondere hinsichtlich ihrer Funktion.

Hierbei stehen in erster Linie die Funktionen der Komponenten im Vordergrund. Das Gateway bildet also eine Funktionsschnittstelle zwischen der Steuerung und den repräsentierten Komponenten.

Anhand der funktionsbasierten Repräsentationen können Datenpunkte oder Entitäten dargestellt werden, wie beispielsweise "Start", "Stopp", "Material vorhanden", "Tür geschlossen" oder ähnliches. Welcher Sensor oder Aktor einer Komponente, also beispielsweise einer Fördereinheit, angesprochen wird oder werden muss, ist dabei für die Steuerung irrelevant. Gegenüber der Steuerung werden vorzugsweise immer die gleichen funktionsbasierten Repräsentationen abgebildet.

Auch einzelne Sensoren oder Aktoren können Komponenten sein und als funktionsbasierte Repräsentationen dargestellt werden. Hierdurch ergibt sich der Vorteil, dass Komponenten verschiedener Hersteller, die dem gleichen Zweck dienen bzw. die gleiche Funktion haben, einfach gegeneinander ausgetauscht und an die Steuerung angebunden werden können. Bildlich gesprochen kann ein Füllstandssensor eines bestimmten Herstellers in der Industrieanlage verbaut und gegenüber der Steuerung als funktionsbasierte Repräsentation dargestellt sein. Die funktionsbasierte Repräsentation kann sich beispielsweise darin erschöpfen, gegenüber der Steuerung eine Füllstandsangabe abstrakt als Prozentangabe wiederzugeben. Wird der Füllstandssensor nun durch einen anderen Füllstandssensor eines anderen Herstellers ausgetauscht, so wird mittels des Gateways gegenüber der Steuerung trotzdem dieselbe funktionsbasierte Repräsentation dargestellt. Die Sensoren sind daher einfach gegeneinander austauschbar, ohne dass hierfür in die Steuerung eingegriffen werden muss.

Die Kommunikation zwischen einer an die Komponentenschnittstelle angebundenen Komponente und dem Gateway, insbesondere dem Datenverarbeitungsmodul, erfolgt vorzugsweise bidirektional. Es ist aber grundsätzlich auch eine unidirektionale Kommunikation denkbar. Mit anderen Worten kann also ein Signal, beispielsweise ein Steuerungssignal, von der Steuerung über das Gateway an die Komponente gesendet werden (unidirektional) und optional ein Antwortsignal empfangen werden (bidirektional). Ebenso ist auch denkbar, dass lediglich ein Sensorsignal oder ein vergleichbares Datensignal einer Komponente vom Gateway bzw. der Steuerung empfangen wird (unidirektional).

Vorzugsweise ist das Datenverarbeitungsmodul dazu ausgebildet, gegenüber der Steuerung stets alle an die wenigstens eine Komponentenschnittstelle anbindbaren Komponenten als funktionsbasierte Repräsentationen darzustellen, insbesondere unabhängig davon, ob die jeweiligen Komponenten tatsächlich an die Komponentenschnittstelle angeschlossen sind. Das Gateway kann so gegenüber der Steuerung stets eine vollständige funktionsbasierte Repräsentation aller anbindbaren Komponenten darstellen, auch wenn eine oder mehrere Komponenten gar nicht an das Gateway, insbesondere die zumindest eine Komponentenschnittstelle, angebunden ist bzw. sind. Mit anderen Worten ist die Anbindung einzelner Komponenten an die Industrieanlage bzw. das Gateway also optional, weshalb die Komponenten einzeln oder auch Einheiten mehrerer Komponenten, nachfolgend auch Baugruppen genannt, als Optionen der Industrieanlage angesehen werden können.

Durch die stets vollständige funktionsbasierte Repräsentation der anbindbaren Komponenten kann eine besonders fehlertolerante Ansteuerung realisiert werden.

Das Gateway kann grundsätzlich als eigenständiges Hardwaregerät ausgebildet sein, insbesondere zur Anordnung im Feldbussystem zwischen der Steuerung und zumindest einer der Komponenten. Dadurch ist es unabhängig von anderen Geräten und kann somit vergleichsweise einfach installiert, ausgetauscht und/oder gewartet werden.

Alternativ kann das Gateway auch als Bestandteil eines Hardwaregeräts der Industrieanlage ausgebildet sein, insbesondere eines Feldbusmoduls oder Switches, wodurch Hardware eingespart werden kann.

In einer weiteren Variante kann das Gateway als Bestandteil eines Edge-Gateways ausgeführt sein. In diesem Zusammenhang ist denkbar, dass das Gateway dazu ausgebildet und eingerichtet ist, die funktionsbasierten Repräsentationen der Komponenten direkt an eine Cloud anzubinden bzw. zu übertragen.

Das Gateway kann auch auf einer Containervisualisierungssoftware basieren, insbesondere auf der Software Docker.

Ferner ist denkbar, dass das Gateway als ein Softwaremodul ausgebildet ist, das insbesondere in einem Steuergerät implementierbar ist, welches die Steuerung umfasst. Auch in dieser Konfiguration kann grundsätzlich Hardware eingespart werden. Darüber hinaus können die Steuerung und das Gateway so direkt miteinander kommunizieren, insbesondere ohne hierfür Datenleitungen vorsehen zu müssen.

Grundsätzlich kann das Gateway auch als ein dezentrales Gerät ausgebildet sein, das eine Mehrzahl von Gateway-Submodulen umfasst, wobei jedes der Gateway-Submodule dazu ausgebildet ist, insbesondere direkt, an jeweils eine der Komponenten angebunden zu werden.

Soll beispielsweise eine weitere Komponente bzw. Option an die Industrieanlage bzw. die Steuerung angebunden werden, so kann diese einfach über das entsprechende Gateway-Submodul an ein Ende des Feldbusses angeschlossen werden. Das Gateway-Submodul kann dazu beispielsweise als Adapter ausgebildet sein, der vorzugsweise direkt an die Komponente anbindbar ist, beispielsweise durch eine Steckverbindung und/oder Schraubverbindung. Dies ist technisch einfach umsetzbar. Das jeweilige Gateway-Submodul kann dann die funktionsbasierte Repräsentation der Komponente über den Feldbus an die Steuerung übertragen.

In einer weiteren Ausführungsvariante ist das Datenverarbeitungsmodul dazu ausgebildet, nacheinander oder gleichzeitig mit mehr als einer der Komponenten zu kommunizieren und die mehreren Komponenten gegenüber der Steuerung als eine einzige funktionsbasierte Repräsentation darzustellen. Beispielsweise kann die Industrieanlage eine Fördereinheit zur Materialzuführung aufweisen, die wiederum mehrere Sensoren und/oder Aktoren umfasst. Die Fördereinheit kann dabei gegenüber der Steuerung als eine einzige funktionsbasierte Repräsentation bzw. als eine Option abgebildet werden. Vereinfacht ausgedrückt werden gegenüber der Steuerung Datenpunkte oder Entitäten wie "Start", "Stopp", "Material vorhanden" etc. der Fördereinheit anstelle der einzelnen Sensoren und/oder Aktoren dargestellt. Welcher einzelne Sensor oder Aktor dazu angesprochen wird, ist dabei für die Steuerung irrelevant, denn ihr gegenüber wird immer die gleiche funktionsbasierte Repräsentation abgebildet. Die Datenverarbeitungseinheit kann vereinfacht ausgedrückt also Informationen mehrerer Komponenten bündeln und die Komponenten gegenüber der Steuerung als Einheit funktionsbasiert darstellen.

Es ist auch denkbar, dass das Gateway eine Zuordnungstabelle umfasst, welche jeder der Komponenten zumindest eine funktionsbasierte Repräsentation zuordnet. Die Zuordnungstabelle kann eine Mehrzahl funktionsbasierter Repräsentationen umfassen, insbesondere wobei jeder der funktionsbasierten Repräsentationen zumindest eine der Komponenten zugeordnet ist. Durch die Zuordnungstabelle wird auf technisch besonders einfache Weise eine fehlerunanfällige Verknüpfung zwischen den Komponenten und den funktionsbasierten Repräsentationen geschaffen. Neue Komponenten und/oder Komponenten anderer Hersteller können vergleichsweise einfach in die Industrieanlage integriert werden, indem die Zuordnungstabelle angepasst und/oder erweitert wird. Ein Eingriff in die Steuerung selbst ist nicht erforderlich.

Zur Veranschaulichung ist nachfolgend ein Beispiel einer Zuordnungstabelle für einen Materialförderer einer Industrieanlage gezeigt.

| **Funktionsbasierte Repräsentationen** | **Option 1: Fördereinheit klein** | **Option 2: Fördereinheit groß** |
|---|---|---|
| An | Förderer_1.Motor_1.an() | Förderer_1.Motor_1.an() |
| | | Förderer_1.Motor_2.an() |
| Aus | Förderer_1.Motor_1.aus() | Förderer_1.Motor_1.aus() |
| | | Förderer_1.Motor_2.aus() |
| Material vorhanden | Förderer_1.Sensor_1.() | Förderer_1.Sensor_1.() |
| | | Förderer_1.Sensor_2.() |

Mit der dargestellten Zuordnungstabelle wird eine Zuordnung mehrerer verschiedener Baugruppen bzw. Optionen, beispielsweise unterschiedlicher Fördereinheiten, und entsprechender funktionsbasierter Repräsentationen geschaffen.

Die funktionsbasierten Repräsentationen beschreiben dabei Entitäten der zugeordneten Baugruppen, beispielsweise die Zustände "An", "Aus", "Material vorhanden" etc.

Die Zuordnungstabelle kann auch Informationen darüber umfassen, welche Komponenten (beispielsweise Motor 1, Motor 2, Sensor 1, Sensor 2 etc.) der jeweiligen Baugruppe bei welchem der Zustände angesteuert werden bzw. anzusteuern sind.

Gegenüber der Steuerung werden vorzugsweise lediglich die funktionsbasierten Repräsentationen dargestellt, also die in der ersten Spalte der gezeigten Zuordnungstabelle genannten Entitäten. Vereinfacht ausgedrückt ist es für die Steuerung somit unerheblich, welche der Baugruppen (Option 1 oder Option 2) tatsächlich in der Industrieanlage vorhanden ist und welche Komponenten die angeschlossene Baugruppe umfasst. Ebenso kann hierdurch einfach die kleine Fördereinheit gemäß Option 1 durch die größere Fördereinheit gemäß Option 2 ersetzt werden. Die in der Zuordnungstabelle dargestellten Optionen bzw. Baugruppen können nämlich einfach gegeneinander ausgetauscht werden, ohne Eingriffe an der Steuerung vornehmen zu müssen.

Alternativ ist es auch möglich, dass das Gateway dazu ausgebildet ist, auf eine externe Zuordnungstabelle zuzugreifen, die beispielsweise in einem Cloud-Speicher hinterlegt sein kann, um eine Zuordnung zwischen den Komponenten und den funktionsbasierten Repräsentationen zu realisieren.

Wie vorstehend bereits erläutert, steuert die Steuerung lediglich die funktionsbasierten Repräsentationen an, was virtuelle Adressen von Funktionen entspricht, die von wenigstens einer der Komponenten bereitgestellt wird. Das Gateway ordnet mittels der Zuordnungstabelle dann die von der Steuerung angesteuerte virtuelle Adresse der entsprechenden Funktion, also die angesteuerte funktionsbasierte Repräsentation, der wenigstens einen Komponente zu, insbesondere der jeweiligen Hardwareadresse.

Grundsätzlich ist es hierdurch möglich, dass ein Austausch oder Wechsel von Komponenten in einfacher Weise erfolgen kann und keine Veränderung der komplexen Steuerung zur Folge hat, da die Steuerung nur die funktionsbasierten Repräsentationen ansteuert, also virtuelle Adressen von Funktionen.

Ferner kann vorgesehen sein, dass das Gateway einen Programmcode umfasst, insbesondere einen Glue-Code, der einen Zusammenhang zwischen ersten Daten einer ersten Komponente der Komponenten und zweiten Daten einer der ersten Komponente zugeordneten funktionsbasierten Repräsentation abbildet, sodass die ersten Daten und die zweiten Daten ineinander umrechenbar sind. Mittels des Programmcodes kann bildlich gesprochen beispielsweise ein Sensorsignal, das die Höhe eines Füllstandes eines Reservoirs der Industrieanlage angibt in ein Volumen, in eine Prozentangabe, oder in die Information "Material vorhanden" umgerechnet werden. Auch dies vereinfacht den Austausch von Komponenten und/oder ganzer Baugruppen.

Durch den Glue-Code können auch beliebige Datenpunkte erzeugt und manipuliert werden, sodass eine erwartete funktionsbasierte Repräsentation geschaffen und gegenüber der Steuerung dargestellt werden kann. So kann mittels des Glue-Codes beispielsweise ein Status bzw. eine Entität einer Baugruppe aus erfassten Zuständen der einzelnen Komponenten erzeugt werden.

Alternativ oder zusätzlich ist auch der Einsatz eines Glue-Codes denkbar, um die Daten verschiedener Komponenten ineinander umzurechnen, beispielsweise um ein erstes Sensorsignal einer ersten Option in ein zweites Sensorsignal einer zweiten Option umzurechnen. Das zweite Sensorsignal kann dann wiederum anhand einer Zuordnungstabelle einer funktionsbasierten Repräsentation zugeordnet werden.

Das Gateway, insbesondere ein Prozessor des Gateways, kann eingerichtet sein, den Programmcode auszuführen, also den Glue-Code.

In einer weiteren Ausführungsvariante umfasst das Gateway einen Hardwarekonfigurator, durch den, insbesondere manuell durch einen Nutzer, Komponentenkonfigurationen zum Konfigurieren der Komponenten einstellbar sind.

Beispielsweise ist das Gateway dazu ausgebildet, an die Komponentenschnittstelle angebundene Komponenten zu konfigurieren und/oder zu parametrieren. Mit anderen Worten können die Komponenten also mittels des Gateways direkt konfiguriert werden. Eine gesonderte Konfiguration durch die Steuerung ist insofern nicht erforderlich, was wiederum die Steuerung insgesamt vereinfacht. Somit können zur Steuerung weniger komplexe Steuerprogramme eingesetzt werden.

Ferner ist denkbar, dass das Datenverarbeitungsmodul dazu ausbildet ist, zu überprüfen, ob eine oder mehrere der Komponenten, von denen erwartet wird, dass sie an die Komponentenschnittstelle angebunden sind, tatsächlich an die Komponentenschnittstelle angebunden sind, beispielsweise anhand einer zyklischen Redundanzprüfung. Durch diese Maßnahme kann die funktionale Sicherheit der Industrieanlage erhöht werden.

Das Gateway kann ferner auch dazu ausgebildet sein, weitere spezifische Sicherheitsvorkehrungen zum Schutz vor Fehlfunktionen der Industrieanlage und/oder zur Minimierung der Auswirkung von Fehlfunktionen zu ergreifen.

Es können insbesondere Maßnahmen gemäß den Normen EN ISO 13849 und/oder IEC 61508 angewendet werden.

Vereinfacht ausgedrückt kann die Überprüfung der Richtigkeit und/oder Vollständigkeit der angeschlossenen Komponenten also über das Gateway erfolgen, insbesondere das Datenverarbeitungsmodul. Es lassen sich somit Sicherheitsmaßnahmen umsetzen, ohne hierfür in die Steuerung eingreifen zu müssen.

Das Gateway kann insbesondere auch dazu ausgebildet sein, basierend auf einem durch die Steuerung vorgegebenem Erwartungswert zu überprüfen, ob, wie viele und/oder welche Komponenten an die Komponentenschnittstelle angeschlossen sind. Diese Informationen können dann optional an die Steuerung zurückgemeldet werden.

Das Gateway kann außerdem auch dazu ausgebildet sein, einen Korrekturwert zu empfangen, insbesondere von der Steuerung. Der Korrekturwert kann beispielsweise im Rahmen einer zyklischen Redundanzprüfung durch das Gateway bei der Ermittlung eines Prüfwertes einbezogen werden, um festzustellen, ob die Anlage betriebsbereit ist.

Die Aufgabe wird erfindungsgemäß außerdem durch ein Feldbussystem für eine Industrieanlage gelöst, umfassend ein erfindungsgemäßes Gateway und eine Steuerung, die an das Gateway über die Steuerungsschnittstelle angebunden ist. Die zum Gateway diskutierten Vorteile gelten für das Feldbussystem in gleicher Weise.

In einer Ausführungsvariante ist die Steuerung des Feldbussystems dazu ausgebildet, auf von dem Gateway bereitgestellte funktionsbasierte Repräsentationen von an die Industrieanlage anbindbaren Komponenten zuzugreifen.

Mit anderen Worten ist die Steuerung also dazu ausgebildet, einzelne Komponenten nicht aufgrund von deren topologischer Position in der Industrieanlage anzusprechen, sondern basierend auf deren Funktionen, Eigenschaften und/oder Parametern.

Insbesondere kann eine funktionsbasierte Repräsentation einer virtuellen Adresse einzelner Komponenten und/oder einer Einheit mehrerer Komponenten entsprechen.

Eine einzelne Komponente kann also durch die Steuerung anhand ihrer jeweiligen funktionsbasierten Repräsentation adressiert werden. Genauso können mehrere eine Einheit bildende Komponenten durch die Steuerung anhand der ihr zugeordneten funktionsbasierten Repräsentation angesprochen werden.

In einer weiteren Ausführungsform ist die Steuerung dazu ausgebildet, vom Gateway bereitgestellte funktionsbasierte Repräsentationen anzusteuern. Das Gateway ist dazu ausgebildet, die Ansteuerungen durch die Steuerung an die Komponenten weiterzuleiten unter Berücksichtigung einer Zuordnungstabelle, auf die das Gateway zumindest zugreifen kann.

Die Steuerung steuert die Komponenten also nicht direkt, sondern abstrahiert über das Gateway an. Vereinfacht ausgedrückt erfolgt also eine Hardwareabstraktion der Komponenten, was wiederum die Steuerung insgesamt vereinfacht und zu einer besseren Austauschbarkeit von Komponenten sowie Integrierbarkeit neuer Komponenten führt.

Die Zuordnungstabelle kann im Gateway selbst hinterlegt sein. Alternativ kann die Zuordnungstabelle auch extern an einer Stelle hinterlegt sein, auf die das Gateway zugreifen kann.

Es kann auch vorgesehen sein, dass das Feldbussystem einen Funktionskonfigurator umfasst, durch den einzelne der funktionsbasierten Repräsentationen konfigurierbar sind.

So können die funktionsbasierten Repräsentationen, beispielsweise durch einen Nutzer, entsprechend den jeweiligen Anforderungen der Industrieanlage angepasst werden.

Beispielsweise können mittels des Funktionskonfigurators einzelne Optionen und/oder funktionsbasierte Repräsentation gezielt aktiviert oder deaktiviert werden. Das Operationsmanagement der Industrieanlage kann so mit geringem Aufwand an Hardwareveränderungen angepasst werden.

Grundsätzlich kann das Gateway innerhalb des Feldbussystems als eigenständiges Hardwaregerät oder als Bestandteil eines anderen Hardwaregeräts zwischen der Steuerung und den Komponenten angeordnet sein. Auch eine Ausbildung als dezentrales Gerät und/oder Softwaremodul ist denkbar.

Es ist auch im Sinne der Erfindung, die erläuterten Gateway-Funktionen auf mehrere Geräte der Industrieanlage zu verteilen.

Es kann auch vorgesehen sein, dass das Feldbussystem mehrere erfindungsgemäße Gateways umfasst, die insbesondere kaskadiert angeordnet sind, um komplexere Steuerungsaufgaben umsetzen zu können.

Weitere Merkmale und Vorteile der Erfindung ergeben sich aus der nachfolgenden Beschreibung sowie aus den Zeichnungen, auf die Bezug genommen wird. In den Zeichnungen zeigen:
- Figur 1 eine schematische Darstellung einer Industrieanlage mit einem aus dem Stand der Technik bekannten Feldbussystem;
- Figur 2 eine schematische Darstellung einer Industrieanlage und ein erfindungsgemäßes Feldbussystem einer ersten Ausführungsform zum Steuern der Industrieanlage;
- Figur 3 eine schematische Darstellung einer Industrieanlage und ein erfindungsgemäßes Feldbussystem einer zweiten Ausführungsform zum Steuern der Industrieanlage;
- Figur 4 eine schematische Darstellung einer dritten Ausführungsform eines erfindungsgemäßen Feldbussystems mit mehreren verschiedenen anbindbaren Komponenten; und
- Figur 5 eine schematische Darstellung eines Gateways, das als dezentrales Gerät ausgebildet ist.

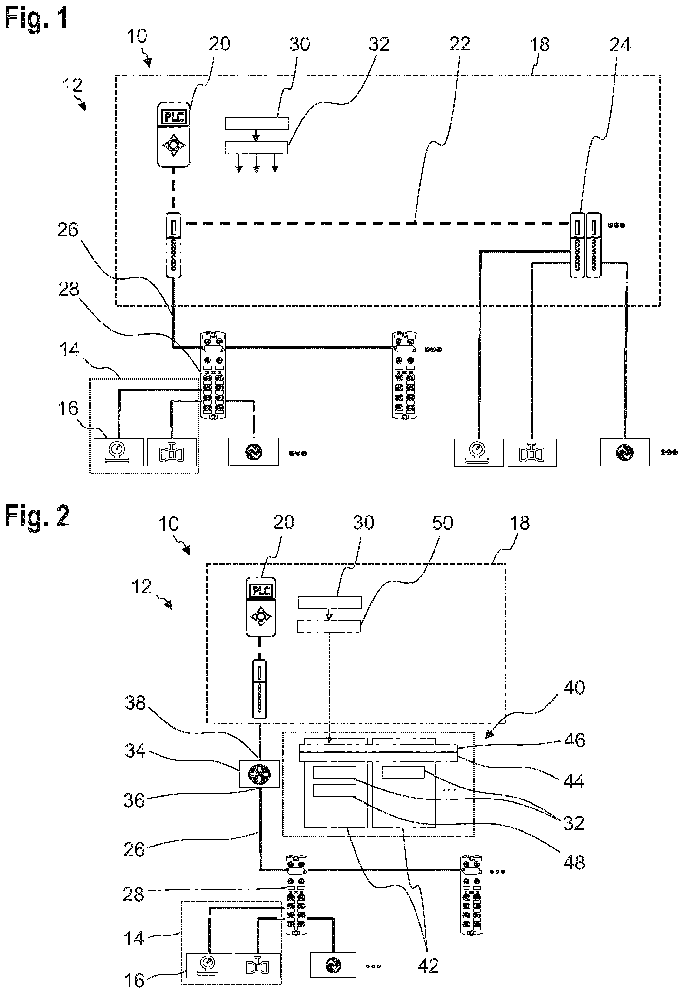

Figur 1 zeigt eine schematische Darstellung einer Industrieanlage 10, beispielsweise einer Produktionsanlage zum Produzieren von Waren, und ein aus dem Stand der Technik bekanntes Feldbussystem 12 zu deren Steuerung.

Die Industrieanlage 10 ist modular aufgebaut und umfasst mehrere Baugruppen 14, z.B. Fördereinheiten zur Materialzuführung, Industrieroboter und/oder Verarbeitungsstationen.

Die Industrieanlage 10 kann durch das Hinzufügen weiterer Baugruppen 14 erweitert werden. Daneben ist es aber auch möglich, einzelne Baugruppen 14 zu entfernen bzw. stillzulegen und/oder durch andere Baugruppen 14 zu ersetzen. Die Baugruppen jeweiligen 14 sind also optional und werden daher nachfolgend auch als "Optionen" bezeichnet.

Die Baugruppen 14 umfassen wiederum jeweils eine oder mehrere Komponenten 16, wie beispielsweise Sensoren und/oder Aktoren, zum Erfassen verschiedener Parameter und/oder zum Ansteuern verschiedener Funktionen. Auch die Komponenten 16 innerhalb einer Baugruppe 14 können austauschbar sein. Es kann zum Beispiel ein Sensor eines bestimmten Typs und/oder Herstellers gegen einen anderen Sensor eines anderen Typs und/oder Herstellers ausgetauscht werden.

Es ist außerdem auch denkbar, dass einer Baugruppe 14 weitere Komponenten 16 hinzugefügt und/oder Komponenten 16 aus einer Baugruppe 14 entfernt werden können. Vereinfacht ausgedrückt sind also auch die Komponenten 16 optional. Es handelt sich ebenfalls um "Optionen".

Eine Baugruppe 14 kann auch eine einzelne Komponente 16 umfassen bzw. aus einer einzelnen Komponente 16 gebildet sein. In diesem Fall können sich die Begriffe Komponente 16 und Baugruppe 14 also auf denselben physischen Gegenstand beziehen.

Das in Figur 1 gezeigte Feldbussystem 12 weist eine Steuerung 18 mit einer Steuerungs-Recheneinheit 20, steuerungsinternen Busverbindungen 22 sowie mehreren IO-Modulen 24 auf. An die Steuerung 18 angeschlossen ist ein Feldbus 26 mit mehreren Feldbusmodulen 28. An die Feldbusmodule 28 sind wiederum jeweils einzelne oder mehreren der Sensoren und/oder Aktoren (also Komponenten 16) angeschlossen.

Die Steuerung 18 umfasst ein Steuerprogramm 30 sowie einen Hardwarekonfigurator 32 zum Konfigurieren der einzelnen über den Feldbus 26 angeschlossenen Komponenten 16. Zum Ansteuern erfolgt ein direkter Zugriff der Steuerung 18 bzw. ein Routing auf die jeweiligen Komponenten 16 anhand von deren jeweiligen Hardwareadressen.

Wird nun eine der Komponenten 16 oder eine ganze Baugruppe 14 ausgetauscht, stillgelegt oder eine neue Komponente 16 bzw. eine neue Baugruppe 14 hinzugefügt, so sind aufwändige Eingriffe in die Steuerung 18 notwendig, um diese an die veränderte Hardwaresituation anzupassen und den Anlagenbetrieb ungestört aufrechterhalten zu können.

Figur 2 zeigt eine schematische Darstellung einer Industrieanlage 10 und ein erfindungsgemäßes Feldbussystem 12 einer ersten Ausführungsvariante zum Steuern der Industrieanlage 10. Die Industrieanalage 10 sowie das Feldbussystem 12 weisen mehrere Elemente auf, welche der in Figur 1 gezeigten Industrieanlage 10 bzw. dem in Figur 1 gezeigten Feldbussystem 12 entsprechen. Gleiche oder funktionsgleiche Bauteile sind mit denselben Referenznummern versehen.

Im Unterschied zu dem in Figur 1 gezeigten konventionellen Feldbussystem 12 weist das erfindungsgemäße Feldbussystem 12 aus Figur 2 ein an die Steuerung 18 angebundenes erfindungsgemäßes Gateway 34 auf.

Das Gateway 34 weist wenigstens eine Komponentenschnittstelle 36 auf, über welche die unterschiedlichen Komponenten 16 und/oder ganze Baugruppen 14 der Industrieanlage 10 gleichzeitig oder nacheinander direkt oder indirekt, beispielsweise über weitere Feldbusmodule 28, mit dem Gateway 34 verbunden sind.

Ferner weist das Gateway 34 eine Steuerungsschnittstelle 38 auf, an welche die Steuerung 18 der Industrieanlage 10 angebunden ist.

In der in Figur 2 gezeigten Variante ist das Gateway 34 als ein eigenständiges Hardwaregerät ausgebildet und im Feldbussystem 12 zwischen der Steuerung 18 und den Komponenten 16 bzw. Baugruppen 14 angeordnet. Dies ist selbstverständlich nicht einschränkend zu verstehen. Alternativ kann das Gateway 34 auch als Bestandteil eines anderen Hardwaregeräts der Industrieanlage 10 ausgebildet sein, insbesondere eines Feldbusmoduls 28 oder eines Switches.

Das Gateway 34 umfasst ein Datenverarbeitungsmodul 40, das dazu ausgebildet ist, die an die Komponentenschnittstelle 36 angebundenen Komponenten 16 oder Baugruppen 14 anhand ihnen zugeordneter Hardwareadressen zu identifizieren und mit ihnen über die Komponentenschnittstelle 36 zu kommunizieren.

Das Datenverarbeitungsmodul 40 ist ferner dazu ausgebildet mit der Steuerung 18 zu kommunizieren und die Komponenten 16 bzw. Baugruppen 14 dabei gegenüber der Steuerung 18 als funktionsbasierte Repräsentationen 42 darzustellen.

Die funktionsbasierten Repräsentationen 42 stellen virtuelle Abstraktionen der einzelnen Komponenten 16 oder ganzer Baugruppen 14 mit mehreren Komponenten 16 dar.

Dies bedeutet, dass gegenüber der Steuerung 18 nicht mehr die Hardwareadressen sowie Signale einzelner Sensoren oder Aktoren dargestellt werden, sondern Datenpunkte oder Entitäten, wie beispielsweise "Start", "Stopp", "Material vorhanden" oder Ähnliches.

Das Datenverarbeitungsmodul 40 kann dazu ausgebildet sein, nacheinander oder gleichzeitig mit mehr als einer der Komponenten 16 zu kommunizieren und die mehreren Komponenten 16 gegenüber der Steuerung 18 als eine einzige funktionsbasierte Repräsentation 42 darzustellen.

Insbesondere können die Komponenten 16 einer Baugruppe 14, beispielsweise die Sensoren und Aktoren einer Materialzuführung oder eines Industrieroboters, zu einer einzigen funktionsbasierten Repräsentation 42 abstrahiert und mittels dieser der Steuerung 18 gegenüber dargestellt werden.

Um dies zu realisieren, umfasst das Gateway 34 im beschriebenen Ausführungsbeispiel eine Zuordnungstabelle 44, welche jeder der Komponenten 16 und/oder Baugruppen 14 zumindest eine funktionsbasierte Repräsentation 42 zuordnet und/oder die eine Mehrzahl funktionsbasierter Repräsentationen 42 umfasst und jeder der funktionsbasierten Repräsentationen 42 zumindest eine der Komponenten 16 oder Baugruppen 14 zuordnet.

Durch die Zuordnungstabelle 44 wird also ein Zusammenhang zwischen den Komponenten 16 bzw. Baugruppen 14 einerseits, insbesondere deren Hardwareadressen, und den funktionsbasierten Repräsentationen 42 andererseits geschaffen.

Das Gateway 34 bildet somit vereinfacht ausgedrückt eine Funktionsschnittstelle 46, auf welche die Steuerung 18 zugreifen kann.

Im Ausführungsbeispiel umfasst das Gateway 34 außerdem einen Programmcode, insbesondere einen Glue-Code 48, der einen Zusammenhang zwischen Daten von wenigstens einer der Komponenten 16 und Daten einer der funktionsbasierte Repräsentation 42 abbildet, sodass die Daten ineinander transformierbar sind. Beispielsweise kann mittels des Glue-Codes 48 ein erfasster Komponentenzustand 16, zum Beispiel ein Sensorsignal, in eine erwartete funktionsbasierte Repräsentation 42 abgebildet und gegenüber der Steuerung dargestellt werden.

Alternativ oder zusätzlich ist auch denkbar, dass ein Glue-Code 48 eingesetzt wird, der einen Zusammenhang zwischen Daten von wenigstens zwei der Komponenten 16 abbildet, sodass die Daten der jeweiligen Komponenten 16 ineinander umrechenbar sind. Beispielsweise können dadurch Sensoren oder Aktoren verschiedener Hersteller, die mit unterschiedlichen Eingangs- und/oder Ausgangssignalen arbeiten, einfach gegeneinander ausgetauscht werden.

Ferner umfasst das Gateway 34 einen Hardwarekonfigurator 32, durch den, insbesondere manuell durch einen Nutzer, Komponentenkonfigurationen zum Konfigurieren der einzelnen Komponenten 16 einstellbar sind.

Das Datenverarbeitungsmodul 40 ist dazu ausgebildet, an die Komponentenschnittstelle 36 angebundene Komponenten 16 mittels des Hardwarekonfigurators 32 zu konfigurieren und/oder zu parametrieren.

Die Konfiguration und/oder Parametrierung der einzelnen Komponenten 16 kann also direkt durch das Gateway 34 erfolgen. Vereinfacht ausgedrückt kann die Konfiguration und/oder Parametrierung im Vergleich zu konventionellen Systemen aus der Steuerung 18 ausgelagert werden, wodurch die Steuerungskomplexität reduziert wird.

Das Datenverarbeitungsmodul 40 ist ferner dazu ausgebildet, gegenüber der Steuerung 18 stets alle an die Komponentenschnittstelle 36 anbindbaren Komponenten 16 und/oder Baugruppen 14 als funktionsbasierte Repräsentationen 42 darzustellen, unabhängig davon, ob die jeweiligen Komponenten 16 und/oder Baugruppen 14 tatsächlich an die Komponentenschnittstelle 36 angeschlossen sind. Der Steuerung 18 gegenüber werden die verfügbaren funktionsbasierten Repräsentationen 42 also stets vollständig abgebildet. Vereinfacht ausgedrückt existieren somit immer zumindest virtuelle durch die Steuerung 18 ansteuerbare Endpunkte, egal ob die betreffenden Komponenten 16 und/oder Baugruppen 14 tatsächlich an die Industrieanlage 10 angebunden und/oder aktiv sind. Hierdurch wird eine besonders fehlertolerante Ansteuerung ermöglicht.

Das Datenverarbeitungsmodul 40 ist außerdem dazu ausbildet, zu überprüfen, ob eine oder mehrere der Komponenten 16 und/oder Baugruppen 14, von denen erwartet wird, dass sie an die Komponentenschnittstelle 36 angebunden ist bzw. sind, tatsächlich an die Komponentenschnittstelle 36 angebunden ist bzw. sind. Dies kann insbesondere anhand einer zyklischen Redundanzprüfung erfolgen. Da der Steuerung 18 gegenüber die verfügbaren funktionsbasierten Repräsentationen 42 stets vollständig abgebildet werden und diese insofern nicht direkt auf die einzelnen Komponenten 16 zugreift, wird die Überprüfung der Komponentenvollständigkeit vereinfacht ausgedrückt also in das Gateway 34 ausgelagert. Auch durch diese Maßnahme kann die Komplexität und Fehleranfälligkeit der Komponenten- bzw. Bauteilansteuerung im erfindungsgemäßen Feldbussystem 12 im Vergleich zu konventionellen Systemen reduziert werden.

Die Steuerung 18 des in Figur 2 gezeigten Feldbussystems 12 ist dazu ausgebildet, auf die von dem Gateway 34 bereitgestellten funktionsbasierten Repräsentationen 42 der Komponenten 16 bzw. Baugruppen 14 zuzugreifen und diese anhand von funktionsbasierten Steuerungsbefehlen anzusteuern.

Die funktionsbasierten Repräsentationen 42 entsprechend dabei virtuellen Adressen der einzelnen Komponenten 16 und/oder ganzer Baugruppen 14. Eine einzelne Komponente 16 oder Baugruppe 14 kann also durch die Steuerung 18 anhand ihrer jeweiligen funktionsbasierten Repräsentation 42 adressiert werden.

Das Gateway 34, leitet die Ansteuerungen durch die Steuerung 18 dann an die jeweiligen Komponenten 16 weiter. Dazu nutzt es die Zuordnungstabelle 44 und übersetzt die funktionsbasierten Steuerungsbefehle vereinfacht ausgedrückt in komponentenspezifische Steuerungsbefehle, welche wiederum von den einzelnen Komponenten 16 empfangen und verarbeitet werden können.

Insbesondere können dabei auch funktionsbasierte Steuerungsbefehle, welche eine ganze Baugruppe 14 betreffen, durch das Gateway 34 in mehrere einzelne komponentenspezifische Steuerungsbefehle aufgeteilt werden, um beispielsweise die verschiedenen Aktoren eines Roboters einzeln anzusprechen.

Die Steuerung 18 umfasst im Ausführungsbeispiel außerdem einen Funktionskonfigurator 50, durch den einzelne der funktionsbasierten Repräsentationen 42 konfigurierbar sind. Die funktionsbasierten Repräsentationen 42 können also durch die Steuerung 18 verwaltet, insbesondere aktiviert, deaktiviert oder verändert, werden.

Über den Funktionskonfigurator 50 können Nutzer, beispielsweise wenn die Industrieanlage 10 um eine neue Baugruppe 14 erweitert wird, eine zur neuen Baugruppe 14 passende funktionsbasierte Repräsentation 42 erstellen, in das Gateway 34 einbinden und/oder aktivieren. Dadurch kann das Operationsmanagement der Industrieanlage 10 mit geringem Aufwand an die veränderte Hardwaresituation angepasst werden, insbesondere ohne in der Steuerung 18 einzelne Komponenten 16 der neuen Baugruppe 14 aufwändig konfigurieren zu müssen.

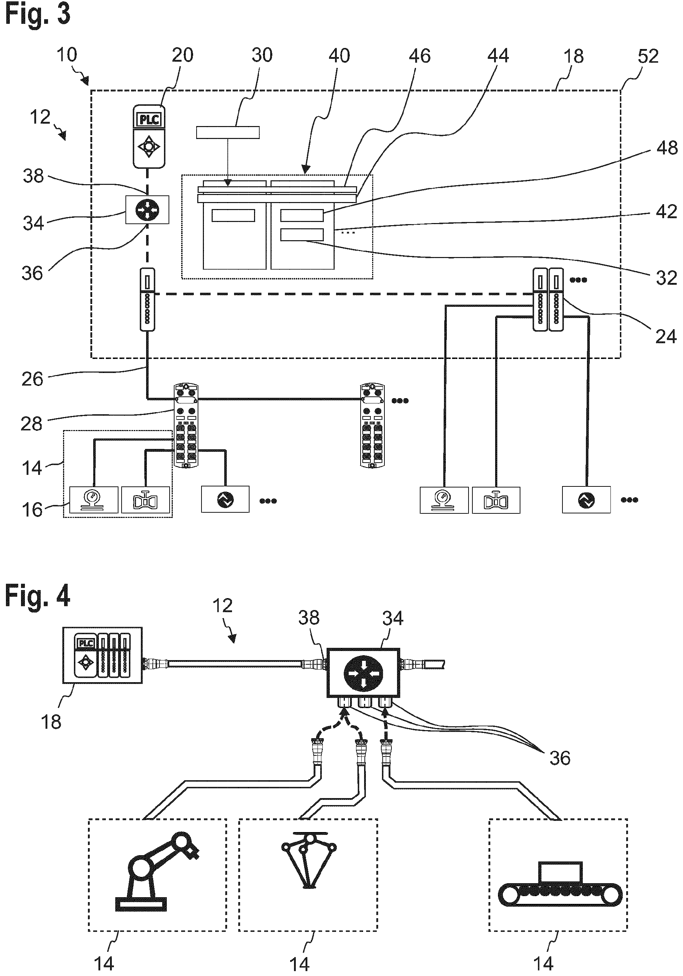

Figur 3 zeigt eine schematische Darstellung einer Industrieanlage 10 und ein erfindungsgemäßes Feldbussystem 12 einer zweiten Ausführungsvariante zum Steuern der Industrieanlage 10. Das Feldbussystem 12 aus Figur 3 entspricht im Wesentlichen dem aus Figur 2, sodass nachfolgend lediglich auf die Unterschiede eingegangen wird. Gleiche oder funktionsgleiche Bauteile sind mit denselben Referenznummern versehen.

Im Gegensatz zu der in Figur 2 gezeigten Ausführungsvariante ist das in Figur 3 dargestellte Feldbussystem 12 nicht als Hardwaregerät sondern als ein Softwaremodul ausgebildet und in ein die Steuerung 18 umfassendes Steuergerät 52 implementiert.

Figur 4 zeigt eine schematische Darstellung einer dritten Ausführungsform eines erfindungsgemäßen Feldbussystems 12. Auch diese entspricht im Wesentlichen den in den Figuren 2 und 3 gezeigten Feldbussystemen 12, sodass nachfolgend lediglich auf die Unterschiede eingegangen wird. Gleiche oder funktionsgleiche Bauteile sind mit denselben Referenznummern versehen.

Das in Figur 4 gezeigte Feldbussystem 12 weist ein Gateway 34 auf, das mehrere Komponentenschnittstellen 36 umfasst, an welche unterschiedliche Baugruppen 14 gleichzeitig oder nacheinander anbindbar sind.

Beispielsweise kann eine der Komponentenschnittstellen 36 dazu ausgebildet sein, mit unterschiedlichen Typen von Industrierobotern verbunden zu werden, die insbesondere gegenüber der Steuerung 18 anhand derselben funktionsbasierten Repräsentation 42 darstellbar sind. Es können also zumindest in ihrer Funktion und/oder in ihren Eigenschaften ähnliche Baugruppen 14 an dieselbe Komponentenschnittstelle 36 angebunden werden. Hierzu müssen an der Steuerung 18 selbst keine Anpassungen vorgenommen werden.

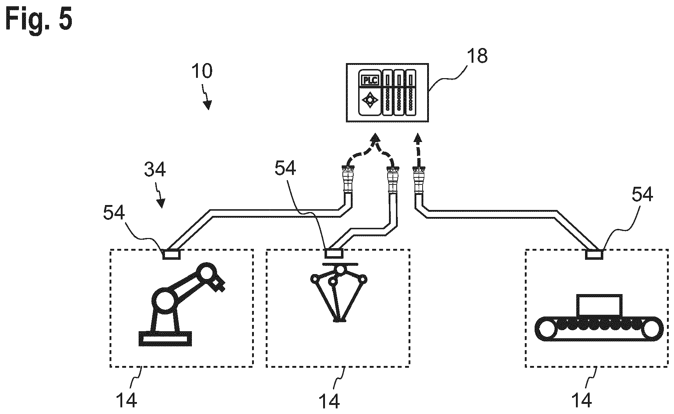

Figur 5 zeigt eine weitere Ausführungsvariante eins erfindungsgemäßen Gateways 34. Das Gateway 34 ist in diesem Beispiel als ein dezentrales Gerät ausgebildet, das eine Mehrzahl von Gateway-Submodulen 54 umfasst. Jedes der Gateway-Submodule 54 ist dazu ausgebildet, direkt an jeweils eine Komponente 16 und/oder Baugruppe 14 einer Industrieanlage 10 angebunden zu werden.

Soll beispielsweise eine weitere Komponente 16 bzw. Baugruppe 14 an die Industrieanlage 10 angebunden werden, so kann diese einfach über ein entsprechendes Gateway-Submodul 54 an ein Feldbusende angeschlossen werden. Die Gateway-Submodule können dazu beispielsweise als Adapter ausgebildet sein, die vorzugsweise direkt an die jeweilige Komponente 16 bzw. Baugruppe 14 anbindbar sind, beispielsweise durch eine Steckverbindung und/oder Schraubverbindung.

Die beschriebenen Ausführungsbeispiele sind selbstverständlich nicht einschränkend zu verstehen.

Insbesondere sind weitere Ausführungsformen erfindungsgemäßer Feldbussysteme 12 denkbar, in denen mehrere Gateways 34 vorgesehen sind.

Die Gateways 34 können dabei bezüglich der Steuerung 18 kaskadiert angeordnet sein. Dadurch wird eine Ansteuerung der Komponenten 16 mit mehreren Abstraktionsebenen ermöglicht. Durch die Steuerung 18 kann also zunächst ein sehr abstrakter funktionsbasierter Steuerbefehl erteilt werden, der dann durch Gateways 34 auf dem Weg zur anzusteuernden Komponente 16 hin immer weiter konkretisiert wird.

### Bezugszeichenliste

| Bezugszeichen | Benennung |
|---|---|
| | |
| 10 | Industrieanlage |
| 12 | Feldbussystem |
| 14 | Baugruppe |
| 16 | Komponente |
| 18 | Steuerung |
| 20 | Recheneinheit |
| 22 | Busverbindung |
| 24 | Modul |
| 26 | Feldbus |
| 28 | Feldbusmodul |
| 30 | Steuerprogramm |
| 32 | Hardwarekonfigurator |
| 34 | Gateway |
| 36 | Komponentenschnittstelle |
| 38 | Steuerungsschnittstelle |
| 40 | Datenverarbeitungsmodul |
| 42 | Funktionsbasierte Repräsentation |
| 44 | Zuordnungstabelle |
| 46 | Funktionsschnittstelle |
| 48 | Glue-Code |
| 50 | Funktionskonfigurator |
| 52 | Steuergerät |
| 54 | Submodul |

## Patentansprüche

1. Gateway für ein Feldbussystem (12) zur Anbindung einer Steuerung (18) an eine Industrieanlage (10), die eine Mehrzahl unterschiedlicher Komponenten (16) aufweist, umfassend
wenigstens eine Komponentenschnittstelle (36), über welche die unterschiedlichen Komponenten (16) gleichzeitig oder nacheinander anbindbar sind,
eine Steuerungsschnittstelle (38), an welche eine Steuerung (18) der Industrieanlage (10) anbindbar ist, und
ein Datenverarbeitungsmodul (40),
das dazu ausgebildet ist, wenn zumindest eine der Komponenten (16) an die wenigstens eine Komponentenschnittstelle (36) angebunden ist, die zumindest eine Komponente (16) anhand einer ihr zugeordneten Hardwareadresse zu identifizieren und mit der zumindest einen Komponente (16) über die Komponentenschnittstelle (36) zu kommunizieren, und
das dazu ausgebildet ist, wenn die Steuerung (18) an die Steuerungsschnittstelle (38) angebunden ist, mit der Steuerung (18) zu kommunizieren und die zumindest eine Komponente (16) dabei gegenüber der Steuerung (18) als eine funktionsbasierte Repräsentation (42) darzustellen, die von der Steuerung (18) ansteuerbar ist,
wobei das Gateway (34) dazu ausgebildet ist, Ansteuerungen durch die Steuerung (18) an die zumindest eine Komponente (16) weiterzuleiten unter Berücksichtigung einer Zuordnungstabelle (44), auf die das Gateway (34) zumindest zugreifen kann.

2. Gateway gemäß Anspruch 1, wobei das Datenverarbeitungsmodul (40) dazu ausgebildet ist, gegenüber der Steuerung (18) stets alle an die wenigstens eine Komponentenschnittstelle (36) anbindbaren Komponenten (16) als funktionsbasierte Repräsentationen (42) darzustellen, insbesondere unabhängig davon, ob die jeweiligen Komponenten (16) tatsächlich an die Komponentenschnittstelle (36) angeschlossen sind.

3. Gateway gemäß Anspruch 1 oder 2, ausgebildet als eigenständiges Hardwaregerät, insbesondere zur Anordnung im Feldbussystem (12) zwischen der Steuerung (18) und zumindest einer der Komponenten (16).

4. Gateway gemäß Anspruch 1 oder 2, ausgebildet als Bestandteil eines Hardwaregeräts der Industrieanlage (10), insbesondere eines Feldbusmoduls (28), eines Switches oder eines Edge-Gateways.

5. Gateway gemäß Anspruch 1 oder 2, ausgebildet als ein Softwaremodul, das insbesondere in ein Steuergerät (52) implementierbar ist, welches die Steuerung (18) umfasst.

6. Gateway gemäß einem der vorhergehenden Ansprüche, wobei das Datenverarbeitungsmodul (40) dazu ausgebildet ist, nacheinander oder gleichzeitig mit mehr als einer der Komponenten (16) zu kommunizieren und die mehreren Komponenten (16) gegenüber der Steuerung (18) als eine einzige funktionsbasierte Repräsentation (42) darzustellen.

7. Gateway gemäß einem der vorhergehenden Ansprüche, umfassend eine Zuordnungstabelle (44), welche jeder der Komponenten (16) zumindest eine funktionsbasierte Repräsentation (42) zuordnet und/oder die eine Mehrzahl funktionsbasierter Repräsentationen (42) umfasst.

8. Gateway gemäß einem der vorhergehenden Ansprüche, umfassend einen Programmcode, insbesondere Glue-Code (48), der einen Zusammenhang zwischen ersten Daten einer ersten Komponente (16) der Komponenten (16) und zweiten Daten einer der ersten Komponente (16) zugeordneten funktionsbasierten Repräsentation (42) abbildet, sodass die ersten Daten und die zweiten Daten ineinander umrechenbar sind.

9. Gateway gemäß einem der vorhergehenden Ansprüche, umfassend einen Hardwarekonfigurator (32), durch den, insbesondere manuell durch einen Nutzer, Komponentenkonfigurationen zum Konfigurieren der Komponenten (16) einstellbar sind.

10. Gateway gemäß einem der vorhergehenden Ansprüche, wobei das Datenverarbeitungsmodul (40) dazu ausgebildet ist, an die Komponentenschnittstelle (36) angebundene Komponenten (16) zu konfigurieren und/oder zu parametrieren.

11. Gateway gemäß einem der vorhergehenden Ansprüche, wobei das Datenverarbeitungsmodul (40) dazu ausbildet ist, zu überprüfen, ob eine oder mehrere der Komponenten (16), von denen erwartet wird, dass sie an die Komponentenschnittstelle (36) angebunden sind, tatsächlich an die Komponentenschnittstelle (36) angebunden sind, insbesondere anhand einer zyklischen Redundanzprüfung.

12. Feldbussystem für eine Industrieanlage (10), umfassend ein Gateway (34) gemäß einem der vorhergehenden Ansprüche und eine Steuerung (18), die an das Gateway (34) über die Steuerungsschnittstelle (38) angebunden ist.

13. Feldbussystem gemäß Anspruch 12, wobei die Steuerung (18) dazu ausgebildet ist, auf von dem Gateway (34) bereitgestellte funktionsbasierte Repräsentationen (42) von an die Industrieanlage (10) anbindbaren Komponenten (16) zuzugreifen.

14. Feldbussystem gemäß Anspruch 12 oder 13, wobei die Steuerung (18) ausgebildet ist, die von dem Gateway (34) bereitgestellte funktionsbasierte Repräsentationen (42) anzusteuern.

15. Feldbussystem gemäß einem der Ansprüche 12 bis 14, ferner umfassend einen Funktionskonfigurator (50), durch den einzelne der funktionsbasierten Repräsentationen (42) konfigurierbar sind.

## Claims

1. A gateway for a fieldbus system (12) for connecting a controller (18) to an industrial plant (10) having a plurality of different components (16), comprising
at least one component interface (36) via which the different components (16) can be connected simultaneously or sequentially,
a control interface (38) to which a controller (18) of the industrial plant (10) can be connected, and
a data processing module (40)
which, when at least one of the components (16) is connected to the at least one component interface (36), is designed to identify the at least one component (16) on the basis of a hardware address assigned thereto and to communicate with the at least one component (16) via the component interface (36), and
which, when the controller (18) is connected to the control interface (38), is designed to communicate with the controller (18) and to represent the at least one component (16) with respect to the controller (18) as a function-based representation (42), which can be driven by the controller (18),
wherein the gateway (34) is designed to forward drives from the controller (18) to the at least one component (16), taking an assignment table (44) into account to which the gateway (34) has at least access.

2. The gateway according to claim 1, wherein the data processing module (40) is designed to always represent all components (16) which can be connected to the at least one component interface (36) with respect to the controller (18) as function-based representations (42), in particular regardless of whether the respective components (16) are actually connected to the component interface (36).

3. The gateway according to claim 1 or 2, designed as an independent hardware device, in particular for arrangement in the fieldbus system (12) between the controller (18) and at least one of the components (16).

4. The gateway according to claim 1 or 2, designed as a part of a hardware device of the industrial plant (10), in particular of a fieldbus module (28), a switch or an edge gateway.

5. The gateway according to claim 1 or 2, designed as a software module which can be implemented in particular in a control device (52) comprising the controller (18).

6. The gateway according to any of the preceding claims, wherein the data processing module (40) is designed to communicate sequentially or simultaneously with more than one of the components (16) and to represent the plurality of components (16) with respect to the controller (18) as a single function-based representation (42).

7. The gateway according to any of the preceding claims, comprising an assignment table (44) which assigns at least one function-based representation (42) to each of the components (16) and/or comprises a plurality of function-based representations (42).

8. The gateway according to any of the preceding claims, comprising program code, in particular glue code (48), which maps a relationship between first data of a first component (16) of the components (16) and second data of a function-based representation (42) assigned to the first component (16), so that the first data and the second data can be converted into each other.

9. The gateway according to any of the preceding claims, comprising a hardware configurator (32) by means of which component configurations for configuring the components (16) can be set, in particular manually by a user.

10. The gateway according to any of the preceding claims, wherein the data processing module (40) is designed to configure and/or parameterize components (16) connected to the component interface (36).

11. The gateway according to any of the preceding claims, wherein the data processing module (40) is designed to check whether one or more of the components (16) which are expected to be connected to the component interface (36) are actually connected to the component interface (36), in particular on the basis of a cyclic redundancy check.

12. A fieldbus system for an industrial plant (10), comprising a gateway (34) according to any of the preceding claims and a controller (18) connected to the gateway (34) via the control interface (38).

13. The fieldbus system according to claim 12, wherein the controller (18) is designed to access function-based representations (42) provided by the gateway (34) of components (16) which can be connected to the industrial plant (10).

14. The fieldbus system according to claim 12 or 13, wherein the controller (18) is designed to drive the function-based representations (42) provided by the gateway (34).

15. The fieldbus system according to any of claims 12 to 14, further comprising a function configurator (50) by means of which individual function-based representations (42) can be configured.

## Revendications

1. Passerelle pour un système de bus de terrain (12) pour le raccordement d'une commande (18) à une installation industrielle (10) comportant une pluralité de composants différents (16), comprenant
au moins une interface de composant (36) par l'intermédiaire de laquelle les différents composants (16) peuvent être raccordés simultanément ou successivement,
une interface de commande (38) à laquelle une commande (18) de l'installation industrielle (10) peut être raccordée, et
un module de traitement de données (40),
lequel, lorsqu'au moins l'un des composants (16) est raccordé à ladite au moins une interface de composant (36), est réalisé de manière à identifier ledit au moins un composant (16) au moyen d'une adresse de matériel qui lui est attribuée et à communiquer avec ledit au moins un composant (16) par l'intermédiaire de l'interface de composant (36), et
lequel, lorsque la commande (18) est raccordée à l'interface de commande (38), est réalisé de manière à communiquer avec la commande (18) et à présenter ledit au moins un composant (16) par rapport à la commande (18) sous forme de représentation (42) basée sur les fonctions apte à être pilotée par la commande (18),
la passerelle (34) étant réalisée de manière à transmettre des actions de pilotage provenant de la commande (18) audit au moins un composant (16) en tenant compte d'une table de correspondance (44) à laquelle la passerelle (34) a au moins accès.

2. Passerelle selon la revendication 1, le module de traitement de données (40) étant réalisé de manière à toujours représenter, par rapport à la commande (18), tous les composants (16) aptes à être raccordés à ladite au moins une interface de composant (36) sous forme de représentations (42) basées sur les fonctions, notamment indépendamment du fait que les composants respectifs (16) soient effectivement raccordés à l'interface de composant (36).

3. Passerelle selon la revendication 1 ou 2, réalisée sous forme de dispositif matériel autonome, notamment pour l'agencement dans le système de bus de terrain (12) entre la commande (18) et au moins l'un des composants (16).

4. Passerelle selon la revendication 1 ou 2, réalisée sous forme d'élément d'un dispositif matériel de l'installation industrielle (10), notamment d'un module de bus de terrain (28), d'un commutateur ou d'une passerelle Edge.

5. Passerelle selon la revendication 1 ou 2, réalisée sous forme de module logiciel qui est notamment apte à être implémenté dans un dispositif de commande (52) qui comprend la commande (18).

6. Passerelle selon l'une des revendications précédentes, le module de traitement de données (40) étant réalisé de manière à communiquer successivement ou simultanément avec plus d'un des composants (16) et à représenter lesdits plusieurs composants (16) par rapport à la commande (18) sous forme de représentation (42) unique basée sur les fonctions.

7. Passerelle selon l'une des revendications précédentes, comprenant une table de correspondance (44) qui associe à chacun des composants (16) au moins une représentation (42) basée sur les fonctions et/ou qui comprend une pluralité de représentations (42) basée sur les fonctions.

8. Passerelle selon l'une des revendications précédentes, comprenant un code de programme, en particulier un code GIue (48), qui représente une relation entre des premières données d'un premier composant (16) parmi les composants (16) et des deuxièmes données d'une représentation (42) basée sur les fonctions associée au premier composant (16), de sorte que les premières données et les deuxièmes données peuvent être converties les unes en les autres.

9. Passerelle selon l'une des revendications précédentes, comprenant un configurateur matériel (32) au moyen duquel, notamment manuellement par un utilisateur, des configurations de composants peuvent être définies pour configurer les composants (16).

10. Passerelle selon l'une des revendications précédentes, le module de traitement de données (40) étant réalisé de manière à configurer et/ou paramétrer des composants (16) raccordés à l'interface de composant (36).

11. Passerelle selon l'une des revendications précédentes, le module de traitement de données (40) étant réalisé de manière à vérifier si un ou plusieurs des composants (16), dont il est supposé qu'ils sont raccordés à l'interface de composant (36), sont effectivement raccordés à l'interface de composant (36), notamment au moyen d'un contrôle de redondance cyclique.

12. Système de bus de terrain pour une installation industrielle (10), comprenant une passerelle (34) selon l'une des revendications précédentes et une commande (18) raccordée à la passerelle (34) par l'intermédiaire de l'interface de commande (38).

13. Système de bus de terrain selon la revendication 12, la commande (18) étant réalisée de manière à accéder à des représentations (42) basées sur les fonctions, fournies par la passerelle (34), de composants (16) aptes à être raccordés à l'installation industrielle (10).

14. Système de bus de terrain selon la revendication 12 ou 13, la commande (18) étant réalisée de manière à piloter les représentations (42) basées sur les fonctions fournies par la passerelle (34).

15. Système de bus de terrain selon l'une des revendications 12 à 14, comprenant en outre un configurateur de fonctions (50) permettant de configurer des représentations individuelles parmi les représentations basées sur les fonctions (42).
